# EUROPÄISCHE PATENTSCHRIFT

(11) **EP 1 851 145 B1**
(45) Veröffentlichungstag und Bekanntmachung des Hinweises auf die Patenterteilung: **08.09.2010**
(21) Anmeldenummer: 06706572.2
(22) Anmeldetag: 02.02.2006
(51) Int. Cl.: B65G 47/29, B65G 47/88

(54) **VORRICHTUNG UND VERFAHREN ZUM TAKTWEISEN FÖRDERN VON HOLZERZEUGNISSEN**
DEVICE AND METHOD FOR INTERMITTENTLY TRANSPORTING WOOD PRODUCTS
DISPOSITIF ET PROCEDE D'ACHEMINEMENT CADENCE DE PRODUITS EN BOIS

(30) Priorität: 10.02.2005 DE 102005007915
(43) Veröffentlichungstag der Anmeldung: 07.11.2007
(73) Patentinhaber: Esterer WD GmbH & Co. KG, 72770 Reutlingen (DE)
(72) Erfinder: BODARE, Ulf, 129 40 Hägersten (SE)
(74) Vertreter: Witte, Weller & Partner
(86) Internationale Anmeldenummer: PCT/EP2006/000902
(87) Internationale Veröffentlichungsnummer: WO 2006/084623

(56) Entgegenhaltungen:
- DE-A1- 3 150 374
- DE-A1- 3 150 375
- DE-A1- 3 447 476

## Beschreibung

Die Erfindung bezieht sich auf eine Vorrichtung zum taktweisen Fördern von Holzerzeugnissen, insbesondere von Brettern, mit einem Förderer, der eine Auflageebene für die Bretter aufweist, und mit mindestens einem Stopp-Haken, der wahlweise in eine erste Betriebsstellung im Wesentlichen oberhalb der Auflageebene und in eine zweite Betriebsstellung im Wesentlichen unterhalb der Auflageebene bringbar ist, derart, dass die Bretter in der ersten Betriebsstellung des Stopp-Hakens an dem Stopp-Haken festgehalten werden und in der zweiten Betriebsstellung ungehindert über die Auflageebene hinweg förderbar sind, wobei der Stopp-Haken, in Förderrichtung gesehen, eine Erhöhung und dahinter eine Auflagefläche für die Bretter aufweist, die sich in der ersten Betriebsstellung oberhalb der Auflageebene befindet.

Die Erfindung betrifft ferner ein Verfahren zum taktweisen Fördern von Holzerzeugnissen, insbesondere von Brettern, auf einem Förderer, der eine Auflageebene für die Bretter und mindestens einen Stopp-Haken aufweist, der wahlweise in eine erste Betriebsstellung im Wesentlichen oberhalb der Auflageebene und in eine zweite Betriebsstellung im Wesentlichen unterhalb der Auflageebene bringbar ist, derart, dass die Bretter in der ersten Betriebsstellung des Stopp-Hakens an dem Stopp-Haken festgehalten werden und in der zweiten Betriebsstellung ungehindert über die Auflageebene hinweg förderbar sind, wobei der Stopp-Haken, in Förderrichtung gesehen, eine Erhöhung und dahinter eine Auflagefläche für die Bretter aufweist, die sich in der ersten Betriebsstellung oberhalb der Auflageebene befindet

Eine Vorrichtung und ein Verfahren der vorstehend genannten Art sind aus der DE 34 47 466 A1 bekannt.

Vorrichtungen und zum Vereinzeln und zum taktweisen Fördern von Holzerzeugnissen, wie sie beispielsweise in der DE 197 01 028 C2 beschrieben sind, werden in Holzverarbeitungsanlagen eingesetzt, in denen die Holzerzeugnisse in völlig ungeordnetem Zustand, beispielsweise als ungeordneter Haufen von waldkantigen Brettern, angeliefert werden. Durch die Vereinzelung und das taktweise Fördern wird ein Strom von Holzerzeugnissen mit im wesentlichen konstantem Abstand der Holzerzeugnisse erzeugt, der es ermöglicht, die Holzerzeugnisse einzeln und definiert taktweise weiterzuverarbeiten. Im Beispielsfall der waldkantigen Bretter besteht eine solche Weiterverarbeitung beispielsweise darin, die Bretter mittels eines Besäumsäge-Aggregates von ihrer Waldkante zu befreien und dabei die Holzausbeute zu optimieren.

Bei herkömmlichen Anlagen, beispielsweise gemäß der EP 0 888 829 A2, wird der Strom von Holzerzeugnissen über einen Förderer geleitet, üblicherweise einen Querförderer. In diesem Förderer sind Stopp-Haken angeordnet, die gezielt in den Weg der geförderten Holzerzeugnisse gefahren werden können, um den Strom dann kurz anzuhalten, wenn die Folge aufeinanderfolgender Holzerzeugnisse zu dicht wird. Dadurch werden die Holzerzeugnisse gezielt vereinzelt bzw. getaktet, bis im Idealfall ein Strom von Holzerzeugnissen mit konstantem Abstand entsteht. Bei verhältnismäßig geringen Fördergeschwindigkeiten ist das in der Regel unproblematisch, weil die Holzerzeugnisse auf dem unter ihnen weiter laufenden Förderer angehalten werden können, ohne dadurch Schaden zu nehmen.

Bei heutigen Holzverarbeitungsanlagen werden aus wirtschaftlichen Gründen nun aber immer höhere Anforderungen an den Durchsatz dieser Anlagen gestellt. Dies führt dazu, dass die Förderer mit scharf gezahnten Förderketten ausgerüstet werden müssen, um eine sichere Mitnahme der Holzerzeugnisse auch bei hohen Geschwindigkeiten zu ermöglichen. Wenn dann aber ein Holzerzeugnis auf einem solchen Förderer festgehalten wird, besteht die Gefahr, dass die an der Unterseite des Holzerzeugnisses vorbeilaufenden Mitnehmer das Holzerzeugnis an der Unterseite beschädigen oder sogar zerspanen.

Bekannte Stopp-Haken, die sich beim Ausfahren plötzlich in den Weg des anzuhaltenden Bretts stellen, haben darüber hinaus auch den Nachteil, dass sie mit großer zeitlicher Präzision ausgefahren werden müssen.

Aus der eingangs genannten DE 34 47 476 A1 ist eine Zuteilungseinrichtung für Langgut, nämlich für Baumstämme, bekannt. Bei dieser Einrichtung rollen Baumstämme von einer Rampe herunter auf eine Zuteilungseinrichtung mit einem Querförderer, dessen Förderkette eine Förderebene definiert. Der Querförderer ist, in Förderrichtung gesehen, nacheinander mit einer Mehrzahl von Stopp-Haken bzw. Reihen derartiger Stopp-Haken versehen. Jeder Stopp-Haken bildet an seiner Oberseite einen Auflagetisch, der, in Förderrichtung gesehen, eine Erhöhung, dann eine Vertiefung und schließlich einen nach oben aufragenden Stopper aufweist. Die Stopp-Haken sind mittels jeweils eines hydraulischen Antriebes um eine unterhalb des Querförderers angeordnete und quer zur Förderrichtung verlaufende Achse verschwenkbar und damit in drei Betriebsstellungen unterschiedlicher Höhe bringbar. In der ersten, der untersten Betriebsstellung befindet sich der gesamte Stopp-Haken unterhalb der Förderebene, so dass Baumstämme auf dem Querförderer über ihn hinweg gefördert werden können. In der zweiten, der mittleren Betriebsstellung ragen die Stopper über die Förderebene hinaus, der Auflagetisch befindet sich jedoch noch unterhalb der Förderebene, so dass ankommende Baumstämme zunächst nur abgestoppt werden, aber noch auf der Förderkette aufliegen. In der dritten, der obersten Betriebsstellung befindet sich auch der Auflagetisch oberhalb der Förderebene, so dass ein von dem Stopper abgestoppter Baumstamm oberhalb der Förderebene zwischengespeichert werden kann und sich außerhalb des Eingriffsbereiches der scharfen Förderelemente der Förderkette befindet. Ein in jedem Stopp-Haken vorgesehenen Schaltbaustein erkennt, wenn ein Baumstamm in der zweiten Betriebsstellung abgestoppt wurde und leitet den Übergang in die dritte Betriebsstellung ein. Wenn der zwischengespeicherte Baumstamm weiter gefördert werden soll, wird der Stopp-Haken wieder hinunter in die erste Betriebsstellung verschwenkt. Der zwischengespeicherte Baumstamm wird dann von der Förderkette mitgenommen, über den Stopp-Haken hinweg gefördert und beispielsweise vom stromabwärts nächsten Stopp-Haken in der vorstehend beschriebenen Weise erneut abgestoppt und zwischengespeichert.

Die bekannte Einrichtung ist auf die Besonderheiten beim Fördern von sehr schweren und unregelmäßig geformten Baumstämmen ausgelegt. Sie hat damit den Nachteil, dass sie im Aufbau und in der Regelung recht aufwendig und kompliziert ist. Ferner löst sie das oben erläuterte Problem der Beschädigung von auf einer laufenden Förderkette aufliegenden und abgestoppten Holzerzeugnissen nur teilweise, weil die Baumstämme beim Abstoppen zunächst ebenfalls noch auf der laufenden Förderkette aufliegen, ehe der hydraulische Antrieb den bzw. die in Eingriff befindlichen Stopp-Haken mit dem Auflagetisch aus der Förderebene heraus anhebt. Da dies ein in Anbetracht der dabei zu bewegenden Massen relativ langsam ablaufender Vorgang ist, wird der Baumstamm durch die scharfen Förderelemente der sehr schnell laufende Förderkette immer noch erheblich beschädigt.

Weiterhin ergibt sich bei der bekannten Einrichtung ein Nachteil, wenn der ankommende Baumstamm, wie es üblich ist, gegen eine Reihe von Stopp-Haken läuft, deren Stopper an unterschiedlichen Längspositionen des Baumstammes angreifen. Da Baumstämme häufig gekrümmt sind, kommt es zu dieser Anlage zu unterschiedlichen Zeitpunkten und die in den Stopp-Haken befindlichen Schaltbausteine erkennen das Ankommen des Baumstammes zu unterschiedlichen Zeitpunkten. Damit wird der Übergang von der zweiten in die dritte Betriebsstellung bei den verschiedenen Stopp-Haken der Reihe zu unterschiedlichen Zeitpunkten ausgelöst. Dies hat zur Folge, dass der Baumstamm beispielsweise an seinem dicken Ende bereits angehoben wird, an seinem dünnen Ende aber noch nicht. Es besteht daher die Gefahr, dass der Baumstamm in unkontrollierte Bewegungen versetzt wird, die den Betriebsablauf stören können bzw. aus Sicherheitsgründen eine erhebliche Verminderung der Fördergeschwindigkeit notwendig machen.

Die US 4 120 393 A beschreibt eine Anlage zum Vereinzeln von Artikeln, bei der unterhalb eines Bandförderers in Zwischenräumen zwischen mehreren Bändern verschwenkbare Arme angeordnet sind. Die Arme befinden sich in einer ersten Betriebsstellung unterhalb der Bänder, so dass die Artikel darüber hinweg gefördert werden können. In einer zweiten Betriebsstellung ragen sie mir ihren freien Enden nach oben über die Ebene der Bänder hinaus. Ankommende Artikel gleiten auf eine schräg gewölbte Oberfläche der Arme und werden dort außer Ein griff mit den Bändern gebracht.

In der US 3 209 890 A ist eine Anlage zum Vereinzeln von Brettern beschrieben, die einen Querförderer für die Bretter enthält. Der Querförderer wird auch hier durch mehrere parallele Förderbänder gebildet. Diese sind elastisch und können je nach Bedarf mehr oder weniger gestreckt werden, so dass die Bretter einen mehr oder weniger großen Abstand zueinander erhalten. Am stromabwärtigen Ende des Querförderers ist eine Rolle vorgesehen, über die hinweg die Bretter auf einen schräg nach unten führenden Rollengang kippen.

Die DE 24 24 507 A1 beschreibt eine weitere Vorrichtung zum Vereinzeln von Stückgütern. Bei dieser Vorrichtung laufen die Stückgüter über einen Bandförderer. An dessen stromabwärtigen Ende befindet sich eine Gleitschiene im Übergang zu einer nach unten geneigten Rutsche. Die Gleitschiene ist abgeknickt ausgebildet, so dass die Stückgüter im Bereich des Knicks überkippen.

Aus der EP 1 213 242 A1 ist ein Durchlaufregal für Lagereinheiten bekannt. Das Durchlaufregal weist ein verschwenkbares Rückhalteelement für die Lagereinheiten auf, dessen Oberseite mit einem rutschhemmenden Belag versehen ist.

Schließlich offenbart die US 5 004 094 A noch eine Transportvorrichtung für Papierstapel. Die Vorrichtung enthält eine Speicherstation mit mehreren Bandförderern, auf denen sich Papierstapel befinden können, die von einer Förderebene abgehoben sind. Mittels optoelektronischer Sensoren wird erfasst, ob die Bandförderer beladen sind, damit diese ggf. abgesenkt werden und der darauf befindliche Papierstapel abgefördert werden kann.

Der Erfindung liegt daher die Aufgabe zugrunde, eine Vorrichtung der eingangs genannten Art dahingehend weiterzubilden, dass die vorgenannten Nachteile vermieden werden. Insbesondere soll es möglich werden, ein zuverlässiges taktweises Fördern, ggf. auch eine Vereinzelung von Holzerzeugnissen, insbesondere von Brettern, auch bei Hochgeschwindigkeits-Förderern zu ermöglichen und dabei jedwede Beschädigung der abgestoppten Holzerzeugnisse durch den Förderer zu vermeiden.

Bei einer Vorrichtung der eingangs genannten Art wird diese Aufgabe erfindungsgemäß dadurch gelöst, dass eine Steuerung vorgesehen und derart ausgebildet ist, dass sie ein erstes Steuersignal erzeugt, wenn ein erstes Holzerzeugnis an einer ersten vorbestimmten Position des Förderers vorbei läuft und den Stopp-Haken aus der zweiten Betriebsstellung in die erste Betriebsstellung bringt, wenn das erste Steuersignal auftritt, wobei der Förderer und die Erhöhung derart ausgebildet sind, dass ein an einem in der ersten Betriebsstellung befindlichen Stopp-Haken ankommendes Brett von der Auflageebene über die Erhöhung auf die Auflagefläche gefördert wird.

Bei einer Vorrichtung der eingangs genannten Art wird die Aufgabe erfindungsgemäß durch die folgenden Schritte gelöst:
a) Erzeugen eines ersten Steuersignals, wenn ein erstes Holzerzeugnis an einer ersten vorbestimmten Position des Förderers vorbei läuft;
b) Bringen des Stopp-Hakens aus der zweiten Betriebsstellung in die erste Betriebsstellung, wenn das erste Steuersignal auftritt;
c) Fördern eines Holzerzeugnisses von der Auflageebene (106) über die Erhöhung auf die Auflagefläche;
d) Erzeugen eines zweiten Steuersignals, wenn ein zweites Holzerzeugnis an einer zweiten vorbestimmten Position des Förderers vorbei läuft; und
e) Bringen des Stopp-Hakens von der ersten Betriebsstellung in die zweite Betriebsstellung.

Die der Erfindung zugrunde liegende Aufgabe wird auf diese Weise vollkommen gelöst.

Erfindungsgemäß wird nämlich das Holzerzeugnis beim Abstoppen unmittelbar und selbsttätig, und zwar vollständig außer Eingriff mit dem Förderer gebracht, ohne dass der Stopp-Haken dazu mit einer Sensorsteuerung angehoben werden müsste. Die Stopp-Haken benötigen dazu lediglich zwei Betriebsstellungen, die zwar ebenfalls durch Sensorsignale gesteuert werden, jedoch nicht annähernd in so engen Toleranzen, wie dies beim Stand der Technik notwendig ist.

Bei einer bevorzugten Ausgestaltung der Erfindung ist die Erhöhung als Rampe ausgebildet, insbesondere als Rolle.

Diese Maßnahme hat den Vorteil, dass das Brett mit passiven Mitteln, also selbsttätig, auf die Auflagefläche gelangt.

Besonders bevorzugt ist dabei, wenn die Erhöhung relativ zur Auflagefläche derart dimensioniert und positioniert ist, dass ankommende Bretter zunächst am vorlaufenden Ende angehoben werden und dann, wenn ihr Massenschwerpunkt die Erhöhung passiert hat, mit dem vorlaufenden Ende auf die Auflagefläche des in der ersten Betriebsstellung befindlichen Stopp-Hakens kippen.

Diese Maßnahme hat den Vorteil, dass durch das Abkippen des Holzerzeugnisses, insbesondere des Bretts, ein Großteil des Schwunges aus der Bewegung des Bretts genommen wird, so dass das Brett fast selbsttätig zum Stillstand kommt, ohne gegen einen Anschlag prallen zu müssen. Das Abbremsen des Bretts hat auch den Vorteil, dass der Stopp-Vorgang, d.h. das Hochfahren des Stopp-Hakens, nicht mit großer Präzision ausgeführt werden muss.

Dies wird auch dadurch unterstützt, dass die Auflagefläche mit einer rutschhemmenden Auflage versehen ist.

Besonders bevorzugt ist es, wenn dem Stopp-Haken ein Signalgeber zugeordnet ist und der Signalgeber nach dem Vorbeilaufen eines Holzerzeugnisses an dem Stopp-Haken ein Signal abgibt, wobei der Stopp-Haken zum Wechsel aus seiner zweiten Betriebsstellung in die erste Betriebsstellung freigegeben wird, sobald der Signalgeber das Signal abgibt.

Diese Maßnahme hat den Vorteil, dass die Abläufe weiter vereinfacht werden. Auch die Sicherheit gegen Fehlfunktionen wird erhöht, weil eine Ausfahren des Stopp-Hakens nur dann bewirkt werden kann, wenn dies zuvor nach dem Durchlauf des vorhergehenden Bretts freigegeben wurde.

Im Rahmen der vorliegenden Erfindung ist der Förderer bevorzugt ein Querförderer und die geförderten Holzerzeugnisse sind bevorzugt Bretter.

Weitere Vorteile ergeben sich aus der Beschreibung und der beigefügten Zeichnung.

Es versteht sich, dass die vorstehend erläuterten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Seitenansicht einer Förderer- einrichtung mit einem Querförderer und einem Längs- förderer, an dem ein Richttisch einsetzbar ist;
- Fig. 2: in gegenüber Fig. 1 verkleinertem Maßstab eine Drauf- sicht auf die Fördereinrichtung;
- Fig. 3: in stark vergrößertem Maßstab einen Ausschnitt aus Fig. 2 zur Erläuterung von Einzelheiten des Richt- tisches;
- Fig. 4: eine Seitenansicht eines Stopp-Hakens, wie er in einem Querförderer der Fördereinrichtung einsetzbar ist, in einer ersten Betriebsstellung;
- Fig. 5: eine Darstellung wie Fig. 4, jedoch für eine zweite Betriebsstellung des Stopp-Hakens;
- Fig. 6: eine Darstellung ähnlich Fig. 4 zum Erläutern eines taktweisen Fördervorganges in einer ersten Phase;
- Fig. 7: eine Darstellung wie Fig. 6, jedoch für eine zweite Phase; und
- Fig. 8: eine Darstellung wie Fig. 6, jedoch für eine dritte Phase.

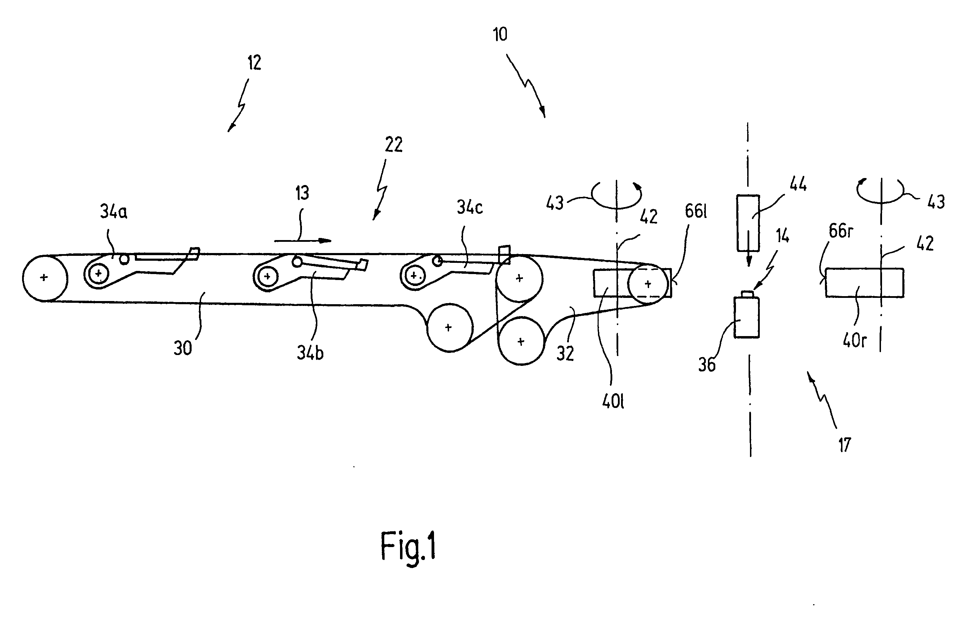

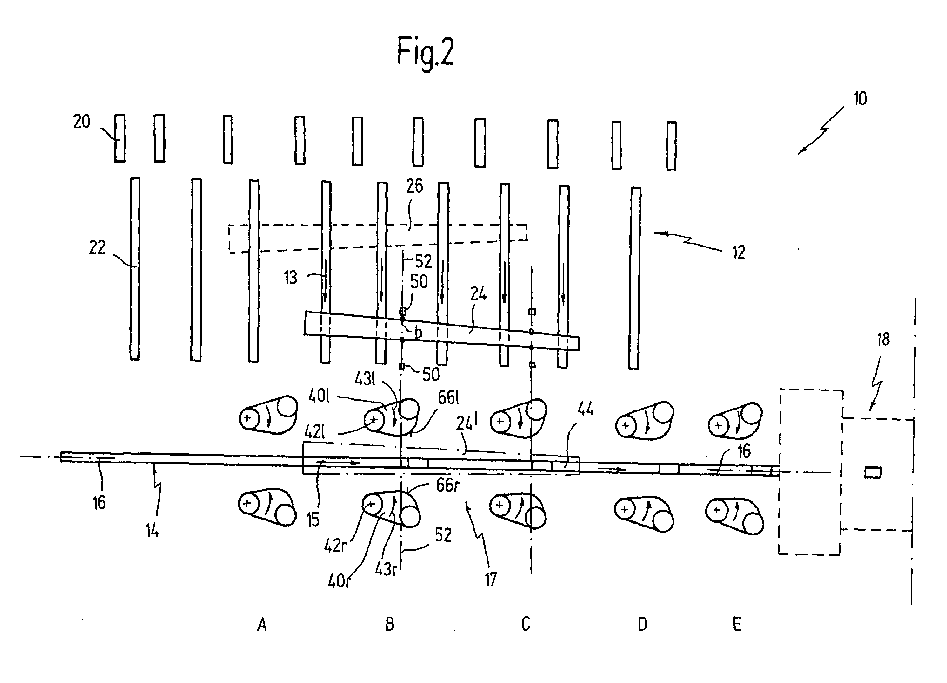

In Fig. 1 und 2 bezeichnet 10 eine Fördereinrichtung für Holzerzeugnisse, insbesondere für noch waldkantige Bretter. Die Bretter werden der Fördereinrichtung 10 als ungeordneter Haufen zugeführt. Die Fördereinrichtung 10 hat nun die Aufgabe, diesen ungeordneten Haufen zu ordnen, indem zunächst die Bretter vereinzelt und dann in vorgegebener Reihenfolge und Ausrichtung einer Bearbeitungsstation zugeführt werden. Diese Bearbeitungsstation ist üblicherweise ein Besäumsäge-Aggregat, in dem die Bretter von der Waldkante befreit werden. Dies geschieht unter bestmöglicher Ausnutzung des Holzes.

Die Fördereinrichtung weist eingangs einen Querförderer 12 auf, dessen Förderrichtung mit 13 angegeben ist. Vom Querförderer 12 werden die Holzerzeugnisse einem Längsförderer 14 übergeben, dessen Förderrichtung mit 15 bezeichnet ist. Die Quer-Förderrichtung 13 und die Längs-Förderrichtung 15 stehen aufeinander senkrecht. Der Längsförderer 14 ist üblicherweise ein Kettenförderer. Seine Längsachse, die in der Förderrichtung 15 verläuft, ist mit 16 bezeichnet.

Dem Längsförderer 14 ist ein Richttisch 17 zugeordnet. Der Richttisch 17 hat die Aufgabe, die in Querrichtung vom Querförderer 12 auf den Längsförderer 14 übergebenen Holzerzeugnisse auf dem Längsförderer 14 so auszurichten, dass zum Beispiel in einem stromabwärts des Richttisches 17 angeordneten Besäumsäge-Aggregat 18 die Waldkante waldkantiger Bretter mit größtmöglicher Holzausbeute entfernt werden kann. "Ausrichten" bedeutet dabei, dass die Holzerzeugnisse auf dem Längsförderer 14 in einer vorab berechneten Lage und Winkelstellung zur Längsachse auf dem Längsförderer 14 positioniert werden.

Wie Fig. 2 zeigt, ist der Querförderer 12 mehrstufig ausgebildet, indem in Quer-Förderrichtung 13 hintereinander Gruppen von ersten Querförderelementen 20 und von zweiten Querförderelementen 22 angeordnet sind, meist noch weitere Querförderelemente davor. Diese Querförderelemente 20, 22 und weitere haben den Sinn, die ungeordnet angelieferten Holzerzeugnisse zu ordnen, d.h. zunächst zu vereinzeln, dann bezüglich ihrer Vorderkante auszurichten und schließlich in einem vorgegebenen Takt zu fördern, der dem Takt der nachgeordneten Aggregate entspricht. Die Querförderelemente sind hierzu meist in einer Seitenansicht entlang eines bogenförmigen Weges angeordnet, bei dem die Holzerzeugnisse zunächst bergauf und dann in manchen Anlagen auch wieder bergab gefördert werden. Dies ist dem Fachmann bekannt.

Fig. 2 zeigt als bevorzugtes Beispiel ein Brett 24, das sich gerade auf den zweiten Querförderelementen 22 befindet. Das Brett 24 hat eine undefinierte Länge. Es ist hier zwar bereits vereinzelt, es liegt aber nur ungefähr und undefiniert quer zur Quer-Förderrichtung 13. Es ist auch eine Frage des Zufalls, auf welchen der Querförderelementen 22 es aufliegt. Ein nachfolgendes Brett 26 hat beispielsweise eine andere Länge und liegt auf anderen Querförderelementen 22 auf und auch in einer anderen Ausrichtung, d.h. unter einem anderen Winkel zur Quer-Förderrichtung 13.

Die Bretter 24 und 26 sind jedoch zweckmäßigerweise so geordnet, dass sie beide mit dem selben Ende, im dargestellten Fall mit dem jeweils dünneren Ende voraus in der Längs-Förderrichtung 15 aufgelegt sind.

Wenn die Bretter 24, 26 usw. auf den Längsförderer 14 übergeben werden, sind sie mit ihrer Vorderkante im wesentlichen ausgerichtet und sie haben in Quer-Förderrichtung 13 einen vorbestimmten Abstand zueinander, so dass die Bretter 24, 26 usw. dem Längsförderer 14 in einem entsprechenden Takt übergeben werden.

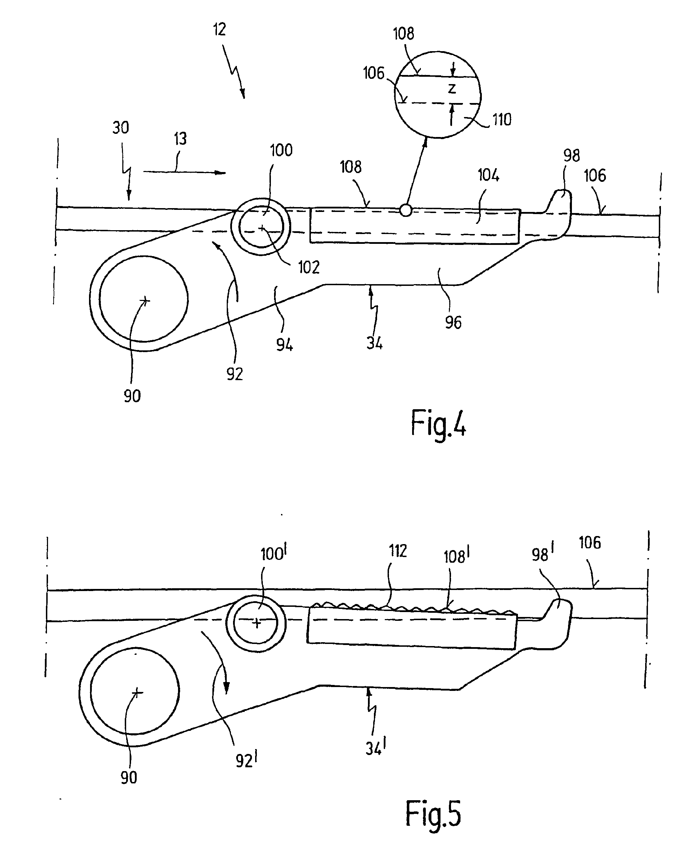

In Fig. 1 ist zu erkennen, dass jedes zweite Querförderelement 22 einen in Förderrichtung 13 ersten Förderabschnitt 30 und einen zweiten Förderabschnitt 32 aufweist. Auf dem ersten Förderabschnitt 30 findet die Ausrichtung der zuvor vereinzelten Bretter 24 an ihrer Vorderkante und die Einstellung des Fördertaktes statt. Zu diesem Zweck sind hintereinander mehrere, beispielsweise drei, Stopp-Haken 34a, 34b und 34c vorgesehen. Deren Funktion wird weiter unten anhand der Fig. 4 bis 8 noch näher erläutert. Der zweite Förderabschnitt 32 ist in Förderrichtung 13 leicht abschüssig ausgebildet und dient zur taktweisen Übergabe der Bretter 24 an den Längsförderer 14 im Bereich des Richttisches 17.

Fig. 1 zeigt ferner, dass der Längsförderer 12 in einem Gehäuse 36 läuft. Weitere Einzelheiten des Längsförderers 12 sind nicht dargestellt, da sie dem Fachmann bekannt sind.

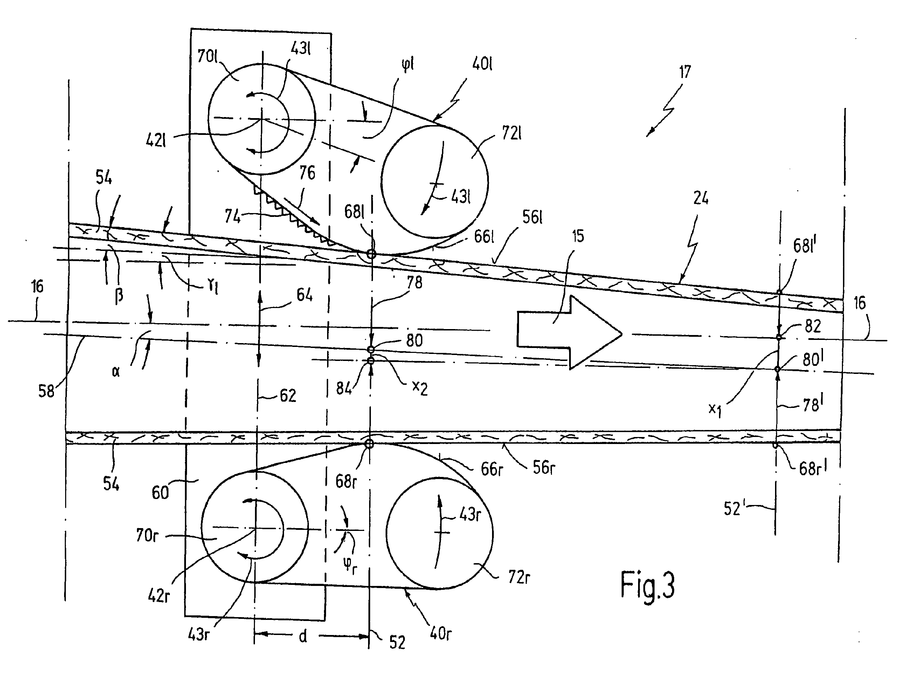

Der Richttisch 17 ist mit mehreren, beispielsweise fünf Paaren A, B, C D und E von Richtarmen versehen, die jeweils beidseits des Längsförderers 12 angeordnet sind. In Fig. 2 und 3 ist ein bezüglich des Längsförderers 12 rechter Richtarm mit 40r und ein linker Richtarm mit 401 bezeichnet. Jeder Richtarm 40r, 401 ist um eine Achse 42r, 421 schwenkbar, wie mit einem Pfeil 43r, 431 angedeutet. Der Schwenkwinkel ist in Figur 3 mit ϕr bzw. ϕl bezeichnet.

Durch eine Koppelstange kann sichergestellt werden, dass die Richtarme 40r und 401 gleichförmig und gegenläufig verschwenkt werden. Die Koppelstange ist insoweit aber nur als Beispiel zu verstehen, weil selbstverständlich auch andere mechanische oder servomotorische Koppelanordnungen verwendet werden können. Da Anordnungen mit Koppelstangen bei großen Öffnungswinkeln konstruktiv bedingt einen Mittenfehler aufweisen, kann bei Ausführungsformen der Erfindung vorgesehen sein, diesen mathematisch berechenbaren Fehler durch eine geeignete individuelle Servosteuerung des Öffnungswinkels der Richtarme zu kompensieren.

Obwohl der Richttisch 17 mehrere Paare A bis E von Richtarmen 401 und 40r aufweist, werden bei Ausführungsbeispielen der Erfindung zum Ausrichten eines bestimmten Bretts nur zwei Richtarmpaare verwendet, die möglichst weit vorne und möglichst weit hinten am Brett angreifen. Die Auswahl unter den vorhandenen Richtarmpaaren wird dabei in Abhängigkeit davon getroffen, welche Länge und welche Position das Brett bei seiner Übergabe vom Querförderer auf den Längsförderer hat. Im Beispiel der Fig. 2 würden für das Ausrichten des Bretts 24 die Richtarmpaare B und C und für das darauf folgende Brett 26 die Richtarmpaare A und C verwendet.

Die Richtarme 40r und 401 werden mit einer vorbestimmten Anpresskraft an die Bretter angelegt. Wenn die Dicke des Bretts beispielsweise 23 mm und die Länge etwa 4 m beträgt, wird bei breiten Brettern mit einer Breite von 40 bis 70 cm eine Anpresskraft im Bereich zwischen 2.000 und 4.000 N eingestellt.

Bei schmalen Brettern mit einer Breite von 10 bis 40 cm wird man die Anpresskraft im Bereich von 300 bis 400 N wählen. Als Faustregel mag gelten, dass die Anpresskraft etwa so groß wie das Eigengewicht des Bretts eingestellt wird.

Ferner sind im Bereich des Längsförderers 12 und damit auch im Bereich des Richttisches 17 mehrere entlang der Längsachse 16 verteilte Niederhalter 44 vorgesehen, wie in Fig. 1 und 2 dargestellt.

Im Bereich des Querförderers 12 befindet sich an jedem Querförderelement 22 eine Messeinrichtung 50, von der in Fig. 2 der Übersichtlichkeit halber nur eine dargestellt ist. Die Messeinrichtung 50 definiert eine Messebene 52, die parallel zur Quer-Förderrichtung 13 verläuft. Die Messeinrichtung 50 besteht im einfachsten Fall aus einer Lichtschranke, kann aber auch zum Beispiel als Laser-Messeinrichtung ausgebildet sein, wie dies an sich bekannt ist. Die Messeinrichtung 50 erfasst die Breite b des Bretts 24 in der jeweiligen Messebene 52. Aus den Messergebnissen wird ferner eine optimale Lage des Bretts 24 auf dem Längsförderer 14 ermittelt, d.h. in welcher Winkellage der Mittellinie des Bretts 24 und in welcher lateralen Position des Bretts 24 auf dem Längsförderer 14 eine optimale Holzausbeute in dem nachgeordneten Besäumsäge-Aggregat 18 erzielt werden kann. Diese Messergebnisse dienen zum Ansteuern der Richtarme, mit denen das Brett 24 entsprechend auf dem Längsförderer 14 ausgerichtet wird.

In Figur 3 ist in vergrößerter Darstellung das Brett 24 mit seinen Waldkanten 54 zu erkennen. Das Brett 24 hat einen rechte Kante 56r und einen linke Kante 561. Eine Mittellinie 58 des Bretts 24 verläuft in der Mitte zwischen den Rändern 56r und 561. Die Mittellinie 58 ist zur Längsachse 16 um einen Winkel α geneigt. Das Brett 24, das, wie bereits erwähnt, mit dem dünneren Ende voraus auf dem Längsförderer 16 aufliegt, hat einen halben Öffnungswinkel β, der von der Kante 56 und der Mittellinie 56 eingeschlossen wird. Insgesamt bedeutet dies, dass die linke Kante 561 zur Längsachse 16 um einen Winkel γ1 angestellt ist, wobei γ1 = α + β ist. Für die rechte Kante 56r gilt entsprechend γr = α - β.

Die beiden Richtarme 40r und 401 sitzen bei Ausführungsbeispielen der Erfindung auf einem gemeinsamen Support, beispielweise einem Rahmen 60 oder dergleichen. Der Rahmen 60 ist in Richtung der Längsachse 16 raumfest. Dies bedeutet, dass die Achsen 42r und 421 eine erste, feste Längsposition 62 definieren. Der Rahmen 60 ist jedoch in einer Richtung quer zur Längsachse 16 verfahrbar, wie mit einem Pfeil 64 angedeutet. Anstelle eines Rahmens kann aber auch eine andere gleichwirkende Anordnung gewählt werden.

Man kann auf den Rahmen auch ganz verzichten, wenn man die Richtarme 40r und 401 jeweils einzeln servomotorisch einstellt. Die Richtarme 40r und 401 brauchen dann nicht quer zur Längsachse 16 verfahrbar zu sein.

Die Richtarme 40r und 401 haben Anlageflächen 66r bzw. 661, die jeweils in einem Anlagepunkt 68r bzw. 681 an den Rändern 56r bzw. 561 anliegen. Die Richtarme 40r und 401 weisen jeweils zwei Räder 70r und 701 sowie 72r und 721 auf, von denen die Räder 70r und 701 um die Achsen 42r bzw. 421 drehbar sind, um die Schwenkbewegung der Richtarme 40r und 401 zu ermöglichen.

Über die Räder 70r, 701 und 72r, 721 läuft eine Förderkette 74, die in Fig. 3 am Richtarm 401 angedeutet ist. Die Förderkette 74 bewegt sich in Richtung des Pfeils 76.

Die Anlageflächen 66r und 661 verlaufen in Fig. 3 bogenförmig oberhalb und zwischen den Rädern 70r und 72r bzw. unterhalb der Räder 701 und 721. Die Anlageflächen 66r und 661 haben eine Formgebung, die so gewählt ist, dass die Anlagepunkte 68r und 681 bei jedem Schwenkwinkel ϕr und ϕl auf einer Geraden liegen, die quer zur Längsachse 16 verläuft und damit eine zweite Längsposition 78 bildet. Das Besondere dabei ist, dass der axiale Abstand d zwischen den Längspositionen 62 und 78 konstant ist, unabhängig, um welchen Winkel ϕr bzw. ϕl die Richtarme 40r bzw. 401 gerade verschwenkt sind. In Fig. 3 erkennt man beispielsweise, dass ϕr etwa 0° beträgt, ϕl hingegen etwa 20°. Erreicht wird dies durch eine Formgebung der Anlageflächen 66r und 661 nach Art einer Evolvente.

Bei anderen Ausführungsbeispielen der Erfindung wird auf die besondere Formgebung der Anlageflächen verzichtet. Man kann nämlich den in Figur 3 mit d bezeichneten konstanten axialen Abstand auch dadurch gewährleisten, dass man die beiden Richtarme in Längsrichtung und in Querrichtung verfahrbar ausbildet und bei einer gegebenen Form der Anlagefläche computergesteuert so entlang der beiden Richtungen verfährt, dass sich der konstante Abstand einstellt. Zu diesem Zweck können die Anlageflächen beispielsweise kreisförmig sein.

Der Sinn dieser Maßnahme besteht in beiden Fällen darin, dass die zweite Längsposition 78 in der Messebene 52 liegt, wenn das Brett 24 vom Querförderer 12 auf den Längsförderer 16 übergeben wird. Damit ist eine klare Zuordnung zwischen der Schwenkbewegung der Richtarme 40r und 401 und der Position der Anlagepunkte 68r bzw. 681 gegeben, die ein definiertes Ausrichten ermöglicht.

Die Messeinrichtung 50 ermittelt zunächst, welche Breite b das Brett 24 hat. Aus den Werten der Breite b wird, wie bereits erwähnt, eine optimale Ausrichtung des Bretts 24 auf dem Längsförderer 14 ermittelt, die mittels der Richtarme 40r und 401 sowie z.B. des am anderen Ende des Bretts angreifenden weiteren Richtarmpaars eingestellt werden soll.

In Fig. 3 ist rechts eine Längsposition 78' eingezeichnet, an der die Richtarme 40r und 401 zunächst an die Ränder 56r und 561 angelegt wurden. Die Messeinrichtung 50 hatte zunächst ermittelt, in welcher lateralen Position das Brett 24 ausgerichtet werden sollte. Diese laterale Position drückt sich in einem Abstand x₁ zwischen einem Mittelpunkt 80' und einem Punkt 82 aus, wobei der Mittelpunkt 80' auf der Mittellinie 58 und der Punkt 82 auf der Längsachse 16 liegt. Durch Verfahren des Rahmens 60 in Richtung des Pfeils 64 wurde beim ersten Anlegen der Richtarme 40r und 401 an die Ränder 56r und 561 erreicht, dass das Brett 24 mit den Anlagepunkten 68r' und 681' in der Messebene 52' bzw. der Längsposition 78' zu liegen kam. Alternativ ist dies wegen des verwendeten Profils der Anlagefläche 66r, 661 auch durch eine individuelle servomotorische Einstellung von quer zur Förderrichtung festen Richtarmen möglich.

Das Brett 24 hatte in diesem Augenblick, in dem es von dem Querförderer 14 auf den Längsförderer 14 übergeben wurde und sich die Richtarme 40r und 401 anlegten, in der Längs-Förderrichtung 15 noch die Geschwindigkeit Null. Um das Brett nun so schnell wie möglich auf die Geschwindigkeit des Längsförderers 14 zu beschleunigen, wurden die Förderketten 74 eingeschaltet, bis die Geschwindigkeit des Bretts 24 und des Längsförderers 14 übereinstimmten.

Während dieses Beschleunigungsvorganges, in Fig. 3 der Bewegung der Anlagepunkte 68r'/681' nach 68r/681, musste der Rahmen 60 in Richtung des Pfeils 64 nachgefahren werden, weil der Mittelpunkt 80' quer zur Längs-Förderrichtung 15, also in der Darstellung der Fig. 3 vom Punkt 84 um den Weg x₂ nach 80 ausgewandert war.

In den Fig. 4 bis 8 ist der Vorgang des taktweisen Fördern mittels der Stopp-Haken 34 auf dem ersten Förderabschnitt 30 dargestellt.

In Fig. 4 erkennt man, dass der dort gezeigte Stopp-Haken 34 um eine Achse 90 verschwenkbar ist, die quer zur Quer-Förderrichtung 13 verläuft. Die Verschwenkbewegung ist mit einem Pfeil 92 angedeutet.

Der Stopp-Haken 34 weist einen hinteren Abschnitt 94 im Bereich der Achse 90 sowie einen vorderen Abschnitt 96 auf. Der vordere Abschnitt 96 läuft am freien Ende des Stopp-Hakens 34 in einen Anschlag 98 aus. An der Oberseite des Stopp-Hakens 34 befindet sich im Übergang zwischen den Abschnitten 94 und 96 eine Rampe in Gestalt einer Rolle 100, die um eine parallel zur Achse 90 verlaufende Achse 102 drehbar ist. Auf dem vorderen Abschnitt 96 befindet sich ein Einsatzteil 104.

Der Querförderer 12 definiert eine Auflageebene 106, auf der die Bretter 24 gefördert werden. Diese Auflageebene 106 wird im Bereich der Querförderelemente 20 und 22 durch Förderketten dargestellt. Bei modernen Förderketten, die auf sehr hohe Fördergeschwindigkeiten ausgelegt sind, müssen die Förderketten ähnlich wie eine Säge scharf gezahnt ausgebildet sein, um die Mitnahme der Bretter zu gewährleisten. Dies bedeutet andererseits, dass ein auf den Förderketten aufliegendes Brett, das durch einen Anschlag in Förderrichtung 13 fest gehalten wird, sogleich von einer solchen Förderkette beschädigt oder sogar zerspant würde.

Aus diesem Grunde sind die Stopp-Haken 34, insbesondere im Bereich des Einsatzteils 104, mit einer Auflagefläche 108 versehen, die um einen Abstand z von der Auflageebene 106 abgehoben ist, wie im vergrößerten Ausschnitt 110 in Fig. 4 deutlich erkennbar. Die Auflagefläche 108 kann zusätzlich mit einem rutschhemmenden Belag 112 versehen sein. Am stromabwärtigen Ende ist die Auflagefläche 108 durch den Anschlag 98 begrenzt.

Fig. 4 zeigt nun eine erste Betriebsstellung des Stopp-Hakens 34. Der Stopp-Haken 34 ist in Richtung des Pfeils 92 nach oben verschwenkt. In dieser ersten Betriebsstellung befindet sich die Auflagefläche 108 in der bereits beschriebenen Weise im Abstand z oberhalb der Auflageebene 106. Auch die Rolle 100 ragt oben über die Auflageebene 106 hinaus. Damit werden in dieser zweiten Betriebsstellung Bretter über die Rolle 100 weg gefördert, auf der Auflagefläche 108 am Anschlag 98 gestoppt und können nicht über den Stopp-Haken 34 hinweg gefördert werden.

Fig. 5 zeigt demgegenüber eine zweite Betriebsstellung, in der der Stopp-Haken 34' in Richtung des Pfeils 92' nach unten verschwenkt ist. In dieser zweiten Betriebsstellung befindet sich der gesamte Stopp-Haken 34', jedenfalls die Auflagefläche 108' sowie die Rolle 100', unterhalb der Auflageebene 106. Damit können in dieser zweiten Betriebsstellung Bretter ungehindert in der Auflageebene 106 über den Stopp-Haken 34' hinweg gefördert werden.

Fig. 5 zeigt weiterhin, dass die Auflagefläche 108 mit einem rutschhemmenden Belag 112 versehen sein kann.

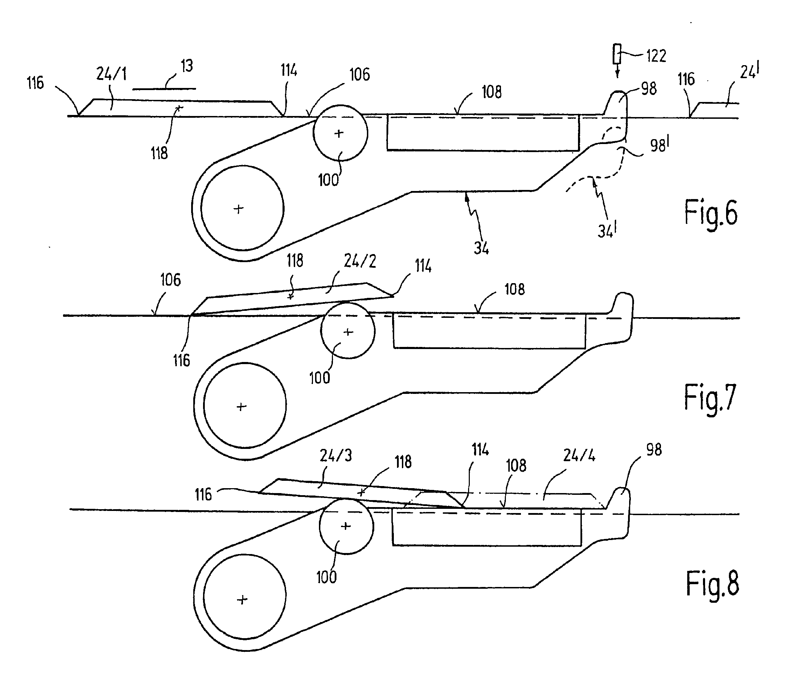

In den Fig. 6 bis 8 ist der Vorgang beim Stoppen eines Bretts 24 im Einzelnen dargestellt.

Fig. 6 zeigt ein in Quer-Förderrichtung 13 ankommendes Brett 24/1. Dessen vorlaufende Kante ist mit 114 und die nachlaufende Kante mit 116 bezeichnet. Der Massenschwerpunkt des Bretts 24/1 ist bei 120 eingezeichnet. Weiterhin ist im Bereich des Anschlages 98 ein Signalgeber 122 zu erkennen. Der Signalgeber ist so angebracht, dass er dann ein Signal abgibt, wenn eine nachlaufende Kante eines Bretts an ihm vorbeiläuft.

Normalerweise befindet sich der Stopp-Haken in seiner zweiten, abgesenkten Betriebsstellung 34', in der die Bretter 24 ungehindert gefördert werden können. Wenn jedoch ein bestimmter Abstand zum vorhergehenden Brett hergestellt werden soll, beispielsweise weil das nächste Brett in einem zu geringen Abstand folgt, wird der Stopp-Haken in die angehobene erste Betriebsstellung ausgefahren, um das nächste Brett zu stoppen, bis der erforderliche Abstand zu dem vorausgegangenen Brett wieder hergestellt ist. Um Störungen zu vermeiden, geht man dabei so vor, dass der in der abgesenkten Betriebsstellung 34' befindliche Stopp-Haken elektronisch verriegelt wird. In einer ersten Stufe wird diese Verriegelung freigegeben und dann im Bedarfsfall der Stopp-Haken in einer zweiten Stufe in die angehobene erste Betriebsstellung hochgeschwenkt.

In Fig. 6 bedeutet dies, dass der Signalgeber 98 jedes Mal dann, wenn ein Brett mit seiner hinteren Kante an ihm vorbeiläuft, den zugeordneten Stopp-Haken 34' freigibt, so dass dieser, falls nötig, dann ausgefahren werden kann. Wenn dies geschieht, ist die in Fig. 6 durchgezogen gezeichnete Situation vorhanden.

Das in dieser Situation von links ankommende Brett 24/1 läuft mit seiner vorlaufenden Kante 114 auf die Rolle 100 auf. Fig. 7 zeigt, dass dadurch das Brett 24/2 mit seiner vorlaufenden Kante 114 angehoben wird. Der Massenschwerpunkt 118 liegt hier noch stromaufwärts der Rolle 100. In der Situation der Fig. 8 hat der Massenschwerpunkt 118 die Rolle 100 passiert, mit der Folge, dass das Brett 24/3 im Uhrzeigersinn nach rechts abkippt und mit seine vorlaufenden Kante 114 auf der Auflagefläche 108 aufsetzt. Infolge seines Schwunges läuft das Brett 24/3 auf der Auflagefläche 108 weiter, bis es spätestens zum Stillstand kommt, wenn die vorlaufende Kante des Bretts 24/4 auf den Anschlag 98 aufläuft. Ab dem Überkippen des Bretts 24/3 ist dieses jedenfalls außer Eingriff mit der in der Auflageebene 106 laufenden Förderkette und deren scharfen Mitnehmern.

Es versteht sich, dass die zuvor beschriebene Funktion der Stopp-Haken auch vorteilhaft zum Vereinzeln der Bretter eingesetzt werden kann.

## Patentansprüche

1. Vorrichtung zum taktweisen Fördern von Holzerzeugnissen, insbesondere von Brettern (24), mit einem Förderer, der eine Auflageebene (106) für die Bretter (24) aufweist, und mit mindestens einem Stopp-Haken (34), der wahlweise in eine erste Betriebsstellung im Wesentlichen oberhalb der Auflageebene (106) und in eine zweite Betriebsstellung im Wesentlichen unterhalb der Auflageebene (106) bringbar ist, derart, dass die Bretter (24) in der ersten Betriebsstellung des Stopp-Hakens (34) an dem Stopp-Haken (34) festgehalten werden und in der zweiten Betriebsstellung ungehindert über die Auflageebene (106) hinweg förderbar sind, wobei der Stopp-Haken (34), in Förderrichtung (13) gesehen, eine Erhöhung und dahinter eine Auflagefläche (108) für die Bretter (24) aufweist, die sich in der ersten Betriebsstellung oberhalb der Auflageebene (106) befindet, **dadurch gekennzeichnet, dass** eine Steuerung vorgesehen und derart ausgebildet ist, dass sie ein erstes Steuersignal erzeugt, wenn ein erstes Holzerzeugnis an einer ersten vorbestimmten Position des Förderers vorbei läuft und den Stopp-Haken (34) aus der zweiten Betriebsstellung in die erste Betriebsstellung bringt, wenn das erste Steuersignal auftritt, wobei der Förderer und die Erhöhung derart ausgebildet sind, dass ein an einem in der ersten Betriebsstellung befindlichen Stopp-Haken (34') ankommendes Brett (24) von der Auflageebene (106) über die Erhöhung auf die Auflagefläche (108) gefördert wird.

2. Vorrichtung nach Anspruch 1, **dadurch gekennzeichnet, dass** die Erhöhung als Rampe ausgebildet ist.

3. Vorrichtung nach Anspruch 2, **dadurch gekennzeichnet, dass** die Rampe als Rolle (100) ausgebildet ist.

4. Vorrichtung nach einem oder mehreren der Ansprüche 1 bis 3, **dadurch gekennzeichnet, dass** die Erhöhung relativ zur Auflagefläche (108) derart dimensioniert und positioniert ist, dass ankommende Bretter (24) zunächst am vorlaufenden Ende (114) angehoben werden und dann, wenn ihr Massenschwerpunkt (118) die Erhöhung passiert hat, mit dem vorlaufenden Ende (114) auf die Auflagefläche (108) des in der ersten Betriebsstellung befindlichen Stopp-Hakens (34) kippen.

5. Vorrichtung nach einem oder mehreren der Ansprüche 1 bis 4, **dadurch gekennzeichnet, dass** die Auflagefläche (108) mit einer rutschhemmenden Auflage (112) versehen ist.

6. Vorrichtung nach einem oder mehreren der Ansprüche 1 bis 5, **dadurch gekennzeichnet, dass** in Förderrichtung am Ende der Auflagefläche (108) ein Anschlag (98) angeordnet ist.

7. Vorrichtung nach einem oder mehreren der Ansprüche 1 bis 6, **dadurch gekennzeichnet, dass** der Förderer ein Querförderer (12) ist.

8. Vorrichtung nach einem oder mehreren der Ansprüche 1 bis 7, **dadurch gekennzeichnet, dass** der Förderer zum Fördern von Brettern ausgebildet ist.

9. Vorrichtung nach einem oder mehreren der Ansprüche 1 bis 8, **dadurch gekennzeichnet, dass** dem Stopp-Haken (34) ein Signalgeber (122) zugeordnet ist, dass der Signalgeber (122) nach dem Vorbeilaufen eines Holzerzeugnisses an dem Stopp-Haken (34) ein Signal abgibt, und dass der Stopp-Haken (34) zum Wechsel aus seiner zweiten Betriebsstellung in die erste Betriebsstellung freigegeben wird, sobald der Signalgeber (112) das Signal abgibt.

10. Verfahren zum taktweisen Fördern von Holzerzeugnissen, insbesondere von Brettern (24), auf einem Förderer, der eine Auflageebene (106) für die Bretter (24) und mindestens einen Stopp-Haken (34) aufweist, der wahlweise in eine erste Betriebsstellung im Wesentlichen oberhalb der Auflageebene (106) und in eine zweite Betriebsstellung im Wesentlichen unterhalb der Auflageebene (106) bringbar ist, derart, dass die Bretter (24) in der ersten Betriebsstellung des Stopp-Hakens (34) an dem Stopp-Haken (34) festgehalten werden und in der zweiten Betriebsstellung ungehindert über die Auflageebene (106) hinweg förderbar sind, wobei der Stopp-Haken (34), in Förderrichtung (13) gesehen, eine Erhöhung und dahinter eine Auflagefläche (108) für die Bretter (24) aufweist, die sich in der ersten Betriebsstellung oberhalb der Auflageebene (108) befindet, mit den Schritten:
a) Erzeugen eines ersten Steuersignals, wenn ein erstes Holzerzeugnis an einer ersten vorbestimmten Position des Förderers vorbei läuft;
b) Bringen des Stopp-Hakens (34) aus der zweiten Betriebsstellung in die erste Betriebsstellung, wenn das erste Steuersignal auftritt;
c) Fördern eines Holzerzeugnisses von der Auflageebene (106) über die Erhöhung auf die Auflagefläche (108);
d) Erzeugen eines zweiten Steuersignals, wenn ein zweites Holzerzeugnis an einer zweiten vorbestimmten Position des Förderers vorbei läuft; und
e) Bringen des Stopp-Hakens (34') von der ersten Betriebsstellung in die zweite Betriebsstellung.

11. Verfahren nach Anspruch 10, **dadurch gekennzeichnet, dass** das zweite Steuersignal nach dem Vorbeilaufen eines Holzerzeugnisses (24) an dem Stopp-Haken (34) erzeugt wird.

12. Verfahren nach Anspruch 10 oder 11, **dadurch gekennzeichnet, dass** die Holzerzeugnisse auf dem Förderer quer gefördert werden.

13. Verfahren nach einem oder mehreren der Ansprüche 10 bis 12, **dadurch gekennzeichnet, dass** auf dem Förderer Bretter gefördert werden.

## Claims

1. Apparatus for clockwise conveying wood products, in particular boards (24), comprising a conveyor having a support plane (106) for the boards (24) and at least one stop hook (34) adapted to be brought either into a first operational position essentially above the support plane (106) or into a second operational position essentially below the support plane (106), such that in the first operational position of the stop hook (34) the boards (24) are kept in position at the stop hook (34) and in the second operational position are adapted to be conveyed freely over and along the support plane (106), wherein the stop hook (34), as seen in the conveying direction (13) is provided with an elevated section and, behind it, a support surface (108) for the boards (24) which, in the first operational position is positioned above the support plane (106), **characterized in that** a control is provided and configured such that it generates a first control signal when a first wood product passes by a first predetermined conveyor position and brings the stop hook (34) from the second operational position into the first operational position when the first control signal appears, wherein the conveyor and the elevated section are configured such that a board (24) arriving at a stop hook (34') being in the first operational position, is conveyed from the support plane (106) over the elevated section onto the support surface (108).

2. The apparatus of claim 1, **characterized in that** the elevated section is configured as a ramp.

3. The apparatus of claim 2, **characterized in that** the ramp is configured as a roller (100).

4. The apparatus of one or more of claims 1 to 3, **characterized in that** the elevated section, relative to the support surface (108), is dimensioned and positioned such that incoming boards (24) are first lifted at their incoming edge (114) and then, as soon as their centre of gravity (118) has passed by the elevated section tip with their incoming edge (114) onto the support surface (108) of the stop hook (34) being in the first operational position.

5. The apparatus of one or more of claims 1 to 4, **characterized in that** the support surface (108) is provided with an anti-friction coating (112).

6. The apparatus of one or more of claims 1 to 5, **characterized in that**, as seen in the conveying direction, a stop (98) is provided at the end of the support surface (108).

7. The apparatus of one or more of claims 1 to 6, **characterized in that** the conveyor is a transversal conveyor (12).

8. The apparatus of one or more of claims 1 to 7 , **characterized in that** the conveyor is configured for conveying boards.

9. The apparatus of one or more of claims 1 to 8, **characterized in that** a signal generator (122) is associated to the stop hook (34), that the signal generator (122) outputs a signal after the passing of a wood product by the stop hook (34) and that the stop hook (34) is set free for a change from its second operational position into the first operational position when the signal generator (112) outputs the signal.

10. A method for clockwise conveying wood products, in particular boards (24), on a conveyor having a support plane (106) for the boards (24) and at least one stop hook (34) adapted to be brought either into a first operational position essentially above the support plane (106) or into a second operational position essentially below the support plane (106), such that in the first operational position of the stop hook (34) the boards (24) are kept in position at the stop hook (34) and in the second operational position are adapted to be conveyed freely over and along the support plane (106), wherein the stop hook (34), as seen in the conveying direction (13) is provided with an elevated section and, behind it, a support surface (108) for the boards (24) which, in the first operational position is located above the support plane (106), comprising the steps of:
a) generating a first control signal, when a first wood product passes by a first predetermined conveyor position;
b) bringing the stop hook (34) from the second operational position into the first operational position, when the first control signal appears;
c) conveying a wood product from the support plane (106) over the elevated section onto the support surface (108);
d) generating a second control signal, when a second wood product passes by a second predetermined conveyor position; and
e) bringing the stop hook (34') from the first operational position into the second operational position.

11. The method of claim 10, **characterized in that** the second control signal is generated after a wood product (24) has passed by the stop hook (34).

12. The method of claim 10 or 11, **characterized in that** the wood products are conveyed transversely on the conveyor.

13. The method of one or more of claims 10 to 12, **characterized in that** boards are conveyed on the conveyor.

## Revendications

1. Dispositif d'acheminement cadencé de produits en bois, notamment de planches (24), comprenant un transporteur qui présente un plan d'appui (106) pour les planches (24), et au moins un crochet d'arrêt (34), qui peut être amené de manière sélective dans une première position fonctionnelle essentiellement au-dessus du plan d'appui (106) et dans une deuxième position fonctionnelle essentiellement en dessous du plan d'appui (106), de telle sorte que les planches (24), dans la première position fonctionnelle du crochet d'arrêt (34) soient fixées sur le crochet d'arrêt (34) et dans la deuxième position fonctionnelle puissent être acheminées sans obstruction au-delà du plan d'appui (106), le crochet d'arrêt (34), vu dans la direction d'avance (13) présentant un rehaussement et derrière lui une surface d'appui (108) pour les planches (24), qui se trouve dans la première position fonctionnelle au-dessus du plan d'appui (106), **caractérisé en ce qu'**une commande est prévue et réalisée de telle sorte qu'elle produise un premier signal de commande quand un premier produit en bois passe devant une première position prédéterminée du transporteur et amène le crochet d'arrêt (34) de la deuxième position fonctionnelle dans la première position fonctionnelle quand le premier signal de commande se produit, le transporteur et le rehaussement étant réalisés de telle sorte qu'une planche (24) arrivant sur un crochet d'arrêt (34') se trouvant dans la première position fonctionnelle soit acheminée depuis le plan d'appui (106) par-dessus le rehaussement sur la surface d'appui (108).

2. Dispositif selon la revendication 1, **caractérisé en ce que** le rehaussement est réalisé sous forme de rampe.

3. Dispositif selon la revendication 2, **caractérisé en ce que** la rampe est réalisée sous forme de rouleau (100).

4. Dispositif selon l'une quelconque ou plusieurs des revendications 1 à 3, **caractérisé en ce que** le rehaussement est dimensionné et positionné par rapport à la surface d'appui (108) de telle sorte que des planches (24) qui arrivent soient d'abord soulevées à l'extrémité avant (114), puis, quand leur centre de gravité (118) a passé le rehaussement, basculent avec l'extrémité avant (114) sur la surface d'appui (108) du crochet d'arrêt (34) se trouvant dans la première position fonctionnelle.

5. Dispositif selon l'une quelconque ou plusieurs des revendications 1 à 4, **caractérisé en ce que** la surface d'appui (108) est pourvue d'un appui antidérapant (112).

6. Dispositif selon l'une quelconque ou plusieurs des revendications 1 à 5, **caractérisé en ce que** l'on dispose une butée (98) dans la direction d'acheminement à l'extrémité de la surface d'appui (108).

7. Dispositif selon l'une quelconque ou plusieurs des revendications 1 à 6, **caractérisé en ce que** le transporteur est un transporteur transversal (12).

8. Dispositif selon l'une quelconque ou plusieurs des revendications 1 à 7, **caractérisé en ce que** le transporteur est réalisé pour transporter des planches.

9. Dispositif selon l'une quelconque ou plusieurs des revendications 1 à 8, **caractérisé en ce que** l'on associe au crochet d'arrêt (34) un générateur de signaux (122), **en ce que** le générateur de signaux (122) délivre un signal après le passage d'un produit en bois devant le crochet d'arrêt (34) et **en ce que** le crochet d'arrêt (34) est libéré pour le passage de sa deuxième position fonctionnelle dans la première position fonctionnelle, dès que le générateur de signaux (112) délivre le signal.

10. Procédé d'acheminement cadencé de produits en bois, notamment de planches (24), sur un transporteur, qui présente un plan d'appui (106) pour les planches (24) et au moins un crochet d'arrêt (34), qui peut être amené de manière sélective dans une première position fonctionnelle essentiellement au-dessus du plan d'appui (106) et dans une deuxième position fonctionnelle essentiellement en dessous du plan d'appui (106), de telle sorte que les planches (24) soient fixées dans la première position fonctionnelle du crochet d'arrêt (34) sur le crochet d'arrêt (34) et puissent être acheminées dans la deuxième position fonctionnelle sans obstruction au-delà du plan d'appui (106), le crochet d'arrêt (34), vu dans la direction d'avance (13), présentant un rehaussement et derrière lui une surface d'appui (108) pour les planches (24), qui se trouve dans la première position fonctionnelle au-dessus du plan d'appui (108), comprenant les étapes suivantes :
a) génération d'un premier signal de commande quand un premier produit en bois passe devant une première position prédéterminée du transporteur ;
b) transfert du crochet d'arrêt (34) de la deuxième position fonctionnelle dans la première position fonctionnelle quand le premier signal de commande est produit ;
c) acheminement d'un produit en bois depuis le plan d'appui (106) par-dessus le rehaussement sur la surface d'appui (108) ;
d) génération d'un deuxième signal de commande quand un deuxième produit en bois passe devant une deuxième position prédéterminée du transporteur ; et
e) transfert du crochet d'arrêt (34') de la première position fonctionnelle dans la deuxième position fonctionnelle.

11. Procédé selon la revendication 10, **caractérisé en ce que** le deuxième signal de commande est généré après le passage d'un produit en bois (24) devant le crochet d'arrêt (34).

12. Procédé selon la revendication 10 ou 11, **caractérisé en ce que** les produits en bois sont acheminés transversalement sur le transporteur.

13. Procédé selon l'une quelconque ou plusieurs des revendications 10 à 12, **caractérisé en ce que** des planches sont acheminées sur le transporteur.
